Europäisches Patentamt

**European Patent Office**

Office européen des brevets

(11) Numéro de publication: **0 117 801**
A2

# (12) DEMANDE DE BREVET EUROPEEN

(21) Numéro de dépôt: **84400282.4**

(22) Date de dépôt: **10.02.84**

(51) Int. Cl.³: **B 05 D 5/08,** B 05 D 7/14,
A 47 J 36/02

(30) Priorité: **11.02.83 FR 8302235**

(43) Date de publication de la demande: **05.09.84**
**Bulletin 84/36**

(84) Etats contractants désignés: **AT BE CH DE GB IT LI LU NL SE**

(71) Demandeur: **Le Creuset Société dite:, F-02230 Fresnoy Le Grand (FR)**

(72) Inventeur: **Delahaye, Jacques Georges Auguste, 543, rue Jean Jaurés, F-02230 Fresnoy Le Grand (FR)**

(74) Mandataire: **Rataboul, Michel, Cabinet Michel Rataboul 69, rue de Richelieu, F-75002 Paris (FR)**

(54) **Sous-couche favorisant le maintien en place d'un revêtement contenant du polytétrafluoréthylène sur une pièce en métal, procédé d'obtention d'une telle pièce et pièce obtenue.**

(57) La sous-couche 4 doit être disposée sur une pièce en métal microporeuse soit naturellement, soit par mise en place d'un revêtement préalable 3 de tout type connu.

Lorsque la pièce 1 est en fonte, le revêtement 3 n'est pas indispensable, car la fonte est naturellement microporeuse.

La sous-couche comprend au moins deux composants, l'un fondant et l'autre réfractaire, c'est-à-dire ayant un point de ramollissement supérieur à 800°C. Ce composant réfractaire est, avantageusement, riche en alumine.

Après mise en place de la sous-couche 4, on porte la pièce à une température comprise entre les points de ramollissement des deux composants afin que le fondant coule dans les microporosités, tandis que le réfractaire reste en surface, non fondu, en présentant des cristaux à faces vives 5.

L'enduit au polytétrafluoréthylène 6-7-8 est mis en place sur la sous-couche 4 ainsi transformée après refroidissement et il s'accroche facilement grâce aux cristaux à pointes vives 5 qui s'y incrustent comme des crochets ou des hameçons.

# SOUS-COUCHE FAVORISANT LE MAINTIEN EN PLACE D'UN REVETEMENT CONTENANT DU POLYTETRAFLUORETHYLENE SUR UNE PIECE EN METAL, PROCEDE D'OBTENTION D'UNE TELLE PIECE ET PIECE OBTENUE

Le revêtement d'une pièce en aluminium, telle qu'un ustensile pour la cuisson d'aliments, au moyen d'un enduit contenant du polytétrafluoréthylène, constitue une opération bien connue et qui ne pose aucun problème insoluble.

Parmi les différentes solutions connues, on peut citer celle qui prévoit la mise en place préalable d'une sous-couche sur l'aluminium et la cuisson de cette sous-couche en un temps relativement rapide et à une température assez basse : 600 à 620°C.

La cuisson menée ainsi est imparfaite, en ce sens que la sous-couche n'est pas entièrement vitrifiée et sa surface extérieure présente de nombreux cristaux à faces vives qui constituent autant de points d'ancrage efficaces pour l'enduit mis en place après et contenant du polytétrafluoréthylène ou analogue.

Au contraire, le revêtement d'une pièce en fonte, par exemple, pose des problèmes difficiles et, en tous cas, non résolus à ce jour.

Des difficultés surviennent essentiellement en raison de traitements que la pièce doit subir et qui sont tout à fait différents de ceux employés avec l'aluminium. Mais des différences existent aussi entre les métaux autres que l'aluminium et contenant du fer (tôle d'acier par exemple) et ceux qui n'en contiennent pas (fonte).

Cela provient des différences, notamment de composition chimique, de structure, de comportement à la cuisson, et de préparation de surface.

- 2 -    0117801

Ainsi, à titre d'exemple, voici quelques composants et leurs proportions, respectivement dans la fonte et dans la tôle d'acier émaillable :

|  | Fonte | Tôle |
|---|---|---|
| Carbone total ............ | 3 à 3,4 % | 0,06 % |
| Silicium ................. | 2,4 à 2,8 % | traces |
| Manganèse ................ | 0,45 à 0,55 % | 0,40 % |
| Soufre ................... | 0,08 à 0,12 % | 0,04 % |
| Phosphore ................ | 1,00 à 1,2 % | 0,06 à 0,1 % |

En ce qui concerne la structure, la fonte, cristalline, présente une microporosité alors que la tôle de métal est lisse en surface puisqu'elle a été laminée.

Lors de la cuisson, la fonte a de forts dégagements gazeux : hydrogène et oxyde de carbone, ce qui n'est pas le cas de la tôle.

Avec la fonte, on est obligé de chauffer la pièce à environ 800°C pendant un temps assez long.

Or, aucune composition connue pour constituer la sous-couche ne supporte cette cuisson sans perdre en même temps ses qualités qui permettent à la fois sa propre fixation et l'ancrage de l'enduit au polytétrafluoréthylène.

La sous-couche devant elle-même être placée sur une surface micro-poreuse, ce qui est le cas de l'aluminium mais non celui de la tôle d'acier, il est nécessaire, dans ce dernier cas, de disposer un revêtement préalable appelé "masse" dans la pratique. Lorsqu'il s'agit de fonte, cette masse n'est pas indispensable.

La sous sous-couche doit présenter à la fois un état de surface particulier, pour remplir une mission mécanique d'accrochage, et des qualités physico-chimiques compatibles avec les traitements que la pièce doit subir.

L'effet mécanique d'accrochage résulte de la pénétration de l'enduit au polytétrafluoréthylène dans les microporosités de la sous-couche dont le nombre et la profondeur dépendent de la présence de cristaux intacts. Cet effet résulte aussi des cristaux à faces vives présents en surface et pénétrant, à la manière de crochets ou d'hameçons dans la matière constitutive de l'enduit.

.../...

Or, sous l'effet de traitements rigoureux tels qu'une température élevée pendant un temps assez long, les cristaux disparaissent, ceux qui devraient être présents en surface étant étalés à plat et présentant une étendue continue à l'enduit qui ne trouve plus ni passage pour s'y introduire ni relief pour s'y accrocher.

Pour situer l'état de la technique, on peut citer, par exemple, le brevet US-A-4.250.215 qui décrit un ustensile de cuisine en tôle d'acier revêtue d'un enduit au polytétrafluoréthylène, avec interposition d'un couche de base et d'une sous-couche. La couche de base contient du quartz (colonne 4, ligne 18) mais cette couche est ensuite cuite (colonne 7 ligne 30) à plus de 800 degrés C (colonne 7, ligne 32 : 1.520 degrés F). Après cuisson, il ne subsiste donc plus d'arêtes vives. La sous-couche consiste en un émail qui, par nature, doit lui aussi être cuit, fondu (colonne 7, ligne 64 à 67), et qui ne peut donc pas contenir, non plus, de cristaux à faces vives. En outre, l'adhérence de la couche de base sur la pièce en métal et l'adhérence de la sous-couche sur la couche de base est obtenue par collage et non par pénétration de produits fondants dans des micro-pores. Ce collage est effectué à chaud (colonne 4, lignes 27 à 29, colonne 7, lignes 20 à 34 et 50 à 68).

On connaît aussi le brevet US-A-4.311.755 qui décrit le revêtement d'un objet en acier par plusieurs couches successives d'une composition particulière mais qui n'enseigne pas le moyen d'assurer l'ancrage mécanique d'un enduit du genre polytétrafluoréthylène malgré des traitements thermiques contraignants.

Aucun document de la technique antérieure n'aborde, à fortiori, le problème encore plus complexe du revêtement d'un article en fonte.

La présente invention comble cette lacune et permet de généraliser l'enduction de pièces avec un enduit au polytétrafluoréthylène, ou analogue, même lorsque ces pièces doivent subir des traitements rigoureux, et tout particulièrement la fonte.

A cette fin, l'invention a pour objet une sous-couche devant être disposée sur une pièce en métal pour favoriser le maintien en place d'un enduit simple ou multiple contenant du polytétrafluoréthylène ou analogue, caractérisée en ce que la surface de la pièce étant micro-

poreuse, soit naturellement, soit par application d'un revêtement préalable de tout type connu, cette sous-couche comprend au moins deux composants dont l'un est de type fondant, et le cas échéant contient la même composition que le revêtement préalable, tandis que l'autre composant est de nature réfractaire et est cru, tel qu'un mélange riche en alumine, l'enduit au polytétrafluoréthylène ou analogue devant revêtir entièrement cette sous-couche.

Selon d'autres caractéristiques de l'invention :

- le produit fondant est un mélange à haute fluidité à chaud;

- le mélange a la composition suivante, les quantités étant exprimées en pourcentages du poids total de matières sèches :

| | |
|---|---|
| . feldspath | 20 à 30 % |
| . silice | 10 à 16 % |
| . borax | 38 à 42 % |
| . sable blanc | 12 à 16 % |
| . spath fluor | 2 à 4 % |
| . kaolin | 3 à 6 % |
| . phosphate tricalcique | 0,7 à 1,1 % |

- le mélange a la composition suivante, les quantités étant exprimées en pourcentages du poids total de matière sèches :

| | |
|---|---|
| . feldspath | 25 % |
| . silice | 13 % |
| . borax | 39,6 % |
| . sable blanc | 14 % |
| . spath fluor | 3 % |
| . kaolin | 4,5 % |
| . phosphate tricalcique | 0,9 % |
| | 100,0 % |

- la sous-couche comprend trois composants, le premier contenant un fondant, le deuxième étant un émail à point de ramolissement supérieur à celui du premier composant et le troisième étant un mélange de matières crues réfractaires dont la plus grande partie est formée d'alumine ou analogue;

- les trois composants ont des points de ramolissement étagés comme suit et exprimés en degrés centigrades :

| | |
|---|---|
| . premier composant | 590 à 630° C |
| . deuxième composant | 740 à 780° C |
| . troisième composant | au-dessus de 1.000° C. |

.../...

- le mélange formé par le premier et le deuxième composants comprend au moins un produit ayant un pouvoir dissolvant vis-à-vis des oxydes de fer;

- la pièce portant un revêtement préalable, la sous-couche com-comprend un composant que contient aussi ce revêtement préalable, ce composant étant présent dans le revêtement préalable pour environ 40 % en poids dudit revêtement, et dans la sous-couche pour environ 30 % en poids, le deuxième composant représentant environ 30 % en poids et le troisième représentant environ 40 % en poids de la sous-couche.

L'invention a également pour objet un procédé pour appliquer un enduit simple ou multiple, contenant du polytétrafluoréthylène ou analogue sur au moins une face d'une pièce dont la surface est micro-poreuse, soit naturellement, soit par mise en place préalable d'un revêtement et portant, le cas échéant, une couche d'émail sur au moins une autre face, caractérisé en ce que l'on recouvre la face devant recevoir l'enduit avec une sous-couche régulière contenant un composant fondant et un composant réfractaire cru, que l'on porte le tout à une température supérieure au point de ramolissement du composant fondant et inférieure au point de ramolissement du composant réfractaire cru, qu'après refroidissement on stocke éventuellement la pièce à l'abri de la poussière, que l'on met en place un enduit contenant du polytétrafluoréthylène ou analogue et que l'on porte le tout à une température d'environ 430° C.

Selon un mode de réalisation particulier de ce procédé, l'enduit contenant du polytétrafluoréthylène ou analogue étant du type à trois couches dites couche de base, couche intermédiaire et couche de finition, on place la couche de base après refroidissement et stockage éventuel et on la sèche, on place ensuite la couche intermédiaire et tout de suite après la couche de finition, puis on porte le tout à une température d'environ 430° C.

L'invention a également pour objet une pièce en métal, telle qu' un ustensile de cuisine, revêtue d'une sous-couche telle que définie ci-dessus.

L'invention a également pour objet une pièce en métal, telle qu' un ustensile de cuisine, obtenue par la mise en oeuvre du procédé tel que défini ci-dessus.

.../...

L'invention sera mieux comprise par la description détaillée ci-après faite en référence au dessin annexé. Bien entendu, la description et le dessin en sont donnés qu'à titre d'exemple indicatif et non limitatif.

La figure 1 est une vue schématique montrant en coupe une petite partie d'une pièce en fonte dont une face porte un revêtement préalable et une sous-couche conforme à l'invention, avant cuisson de celle-ci mais après cuisson de la pièce;

La figure 2 est une vue schématique montrant la même petite partie après cuisson de la sous-couche;

La figure 3 est une vue schématique montrant la même petite partie finie, c'est-à-dire après mise en place d'un enduit multiple (à trois couches) contenant du polytétrafluoréthylène;

La figure 4 est une vue schématique partielle en coupe d'une pièce en fonte obtenue conformément à l'invention sous forme d'un récipient en fonte émaillée tel qu'une cocotte.

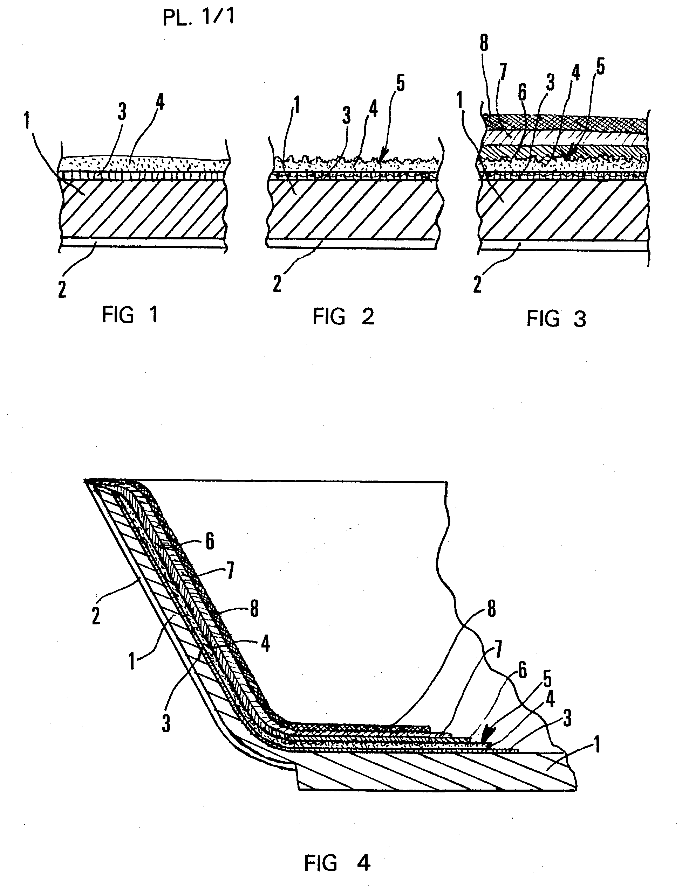

En se reportant au dessin, on voit sur la figure 1 une petite partie d'une pièce en fonte 1 dont l'une des faces dite "extérieure" porte un émail non cuit 2. L'autre face dite "intérieure" porte, ici, un revêtement préalable 3 et, sur celui-ci on a disposé une sous-couche 4 non cuite.

Le revêtement préalable 3 est, dans la pratique, appelé une "masse". Cette masse a pour but de recouvrir la pièce en fonte 1 après refroissement consécutif à sa coulée dans un moule.

En effet, la fonte contient du carbone qui donne des combinés graphitiques, et il faut éliminer ce carbone car sa présence lors de la cuisson de l'émail 2 devant recouvir la pièce en fonte 1 ou, même, lors de l'utilisation de la pièce 1, entraînerait par chauffage le dégagement de gaz sous forme de bulles qui détruiraient l'émail 2 et rendrait la pièce 1 impropre à tout usage.

Pour éliminer le carbone, il faut cuire la pièce à environ 800° C et l'homme de métier sait qu'il faut, au préalable, recouvrir la pièce 1 avec la masse 3 qui est une fine couche, de 20 à 30µ d'épaisseur, d'un matériau très dur qui empêche la formation à la surface de la pièce d'oxydes de fer (Fe O, Fe2 O3 et parfois, Fe3 O4).

Ce matériau est, par exemple, un mélange fritté de sable (silice), de borax et de mica associé à un émail non glacé, généralement appelé une "fritte".

.../...

Ici, cet émail ou fritte, est formé de:

- feldspath .................... 20 à 30 % en poids
- silice ..................... 10 à 16 %  "    "
- borax ....................... 38 à 42 %  "    "
- sable blanc ................. 12 à 16 %  "    "
- spath fluor ................. 2 à  4 %  "    "
- kaolin ..................... 3 à  6 %  "    "
- phosphate tricalcique ........ 0,7 à 1,1 % "    "

Selon un exemple avantageux, on retiendra les proportion suivantes :

- feldspath ................... 25   % en poids
- silice ..................... 13   %  "   "
- borax ..................... 36,6 %  "   "
- sable blanc ................ 14   %  "   "
- spath fluor ................ 3   %  "   "
- kaolin ..................... 4,5 %  "   "
- phosphate tricalcique ........ 0,9 % "   "

Conformément à l'invention, la sous-couche 4 contient un composant fondant devant pénétrer dans les micro-porosités de cet émail ou fritte et, de préférence, ce composant est formé de cette fritte elle-même.

Le rôle de cette sous-couche 4 est de fournir des moyens d'accrochage à l'enduit au polytétrafluoréthylène tout en étant elle- même bien ancrée à la masse 3.

C'est pourquoi la sous-couche 4 contient un composant bien adapté à la fixation à la masse 3 et un composant bien adapté à l'accrochage de l'enduit.

La sous-couche 4 est appliquée sur la masse 3, laquelle comprend des fondants qui favorisent un meilleur accrochage mécanique, notamment grâce à leur association avec un ou plusieurs produits ayant un pouvoir dissolvant vis-à-vis des oxydes de fer.

Avant application, la sous-couche 4 se présente sous forme de barbotine de densité de 1,720.

Après cuisson de cette sous-couche 4, comme expliqué plus loin, elle doit présenter une épaisseur de $90\mu \pm 15\mu$.

La cuisson de la sous-couche 4 se fait à 790° C ± 10° C pendant environ dix minutes.

.../...

Cette cuisson a une grande importance et il faut veiller au maintien de la température à 10° C près et au temps de cuisson qui doit ^etre aussi constant que possible.

Après cette cuisson, les pièces peuvent être stockées à l'abri des poussières avant de recevoir l'enduit au polytétrafluoréthylène mais elles ne doivent pas être posées les unes sur les autres car cela pourrait endommager l'état de surface de la sous-couche 4.

Cet état de surface est très important et on a tenté d'en donner une représentation symbolique sur la figure 2 :

Les composants fondants de la sous-couche 4 ont pénétré dans les micro-pores de la masse 3, du fait de leur haute fluidité à chaud et de leur caractère peu réfractaire. Ils ont, alors, démasqué les composants réfractaires qui n'ont pas fondu puisque la cuisson a été effectuée à une température inférieure à leur point de ramolissement.

Les composants réfractaires non vitrifiés de la sous-couche 4 ont ainsi été découverts, lors de la coulée des produits fondants, comme des rochers sont découverts par la marée descendante, et ils déterminent en surface un réseau de cristaux à faces vives 5.

On donne à la sous-couche 4 une viscosité et/ou une porosité finale telles que les dégagements gazeux de la fonte, lors de la cuisson, puissent passer. Avec une viscosité relativement faible, les gaz traversent la sous-couche qui s'étale à nouveau dès que les dégagements ont cessé. En prévoyant une grande porosité, les gaz traversent sans former de bulles. Grâce à cela, l'invention permet d'appliquer la sous-couche 4 directement sur la fonte, sans l'intermédiaire de la masse 3, une seule cuisson permettant d'obtenir une pièce prête à recevoir l'enduit au polytétrafluoréthylène ou analogue.

Chaque cristal dépassant sera inséré dans l'enduit qui sera déposé sur la sous-couche 4 et formera un point d'accrochage.

Mais cette surface ne doit pas être trop rugueuse. Elle doit présenter de 250 à 300 pointes par pouce carré, donnant à l'ensemble un "profil" régulier dont dépend l'uniformité de l'enduit au polytétrafluoréthylène.

La sous-couche 4 est exempte de plomb, cadmium, baryum, arsenic, sélénium, mercure, argent, chrome ou zinc.

.../...

Sa teneur en fluor est inférieure à 0,03 milligrammes au pouce carré et sa teneur en lithium est inférieure à 0,1 milligrammes par pouce carré.

On voit qu'une sous-couche 4 conforme à l'invention est une heureuse combinaison entre un émail pur et un composite standard.

Outre la fritte définie ci-dessus, la sous-couche 4 comprend un émail dont le point de ramolissement est différent de celui de la fritte (610° C au lieu de 760° C pour la fritte).

Un tel mélange procure un effet satiné pour les émaux de revêtement, c'est-à-dire produit une certaine porosité qui est, ici, une qualité essentielle pour faciliter l'accrochage de l'enduit.

La sous-couche 4 comprend aussi un composite de matières crues dont de l'alumine pour environ 70 % afin de donner à la sous-couche une composante réfractaire, devant donner naissance au réseau de cristaux à faces vives 5, qui ne peuvent exister que parce qu'ils sont en une matière qui ne fond pas aux températures de traitement.

Lorsque la masse 3 contient environ 60 % d'un mélange fritté de sable, de borax et de mica et environ 40 % de la fritte décrite plus haut, cette dernière se trouve aussi dans la sous-couche 4 mais à raison de 30 % environ. Le second émail à point de différent est présent pour environ 30 % aussi et le composite réfractaire riche en alumine pour 40 % environ.

Le composite réfractaire contient beaucoup d'alumine (70 %) car outre ses cristaux réfractaires, celle-ci présente l'avantage d'augmenter la viscosité et la dilatation des éléments de sous-couche 4, ce qui rapproche son coefficient de dilatation de celui de la fonte.

On remarque que les points de ramolissement des deux premiers composants de la sous-couche 4 sont inférieurs à la température de cuisson des émaux standards (environ 800° C) et que le troisième, réfractaire, a un point de ramolissement supérieur.

Ainsi, on procède à la cuisson avec des fours standards, chauffés à la température habituelle. Les produits conformes à l'invention peuvent par conséquent être traités en même temps que les autres, sans sélection préalable et en ne modifiant ni la température du four, ni le temps de cuisson.

.../...

La cuisson unique procure la finition des émaux de décor extérieur, la coulée du composant le plus fondant pour sa pénétration dans les micro-pores et le ramollissement moyen du composant intermédiaire qui freine le tassement de l'ensemble et maintient en surface les cristaux à faces vives du composant réfractaire qui, lui, a un point de ramollissement supérieur à la température de cuisson.

Tous ces matériaux entrant dans la composition de la sous-couche 4 sont broyés avec 50% en poids d'eau.

La barbotine est passée au tamis de 400 mailles par pouce carré et doit être amenée à un refus de 11 centimètres cubes, plus ou moins 1 centimètre cube. Pour une prise de 50 centimètres cubes, le restant de la mouture est inférieur à 38 $\mu$ .

Les caractéristiqiues physiques de la cristallisation à la surface de la sous-couche 4 ont une importance capitale, comme on l'a vu, pour l'accrochage de l'enduit. Or, ces caractéristiques dépendent en partie de la granulométrie des matériaux et l'on doit veiller à sa constance.

A titre d'exemple, on peut procéder ainsi :

Dans un broyeur de 55 litres, on introduit 34 kilos de billes, dont 70 % ont un diamètre de 30 millimètres et 30 % ont un diamètre de 50 millimètres.

Le broyeur est entraîné à 68 tours/minutes et l'on charge le broyeur avec 15 kilos de matières sèches.

Si toute la quantité produite n'est pas utilisée, il faut remettre le reste en suspension et éviter tout dépôt dû à la sédimentation car cela changerait les caractéristiques granulométriques.

Lorsque la sous-couche 4 est cuite et se présente comme l'évoque la figure 2, on peut mettre l'enduit en place.

Pour illustrer l'invention, on a retenu l'exemple d'un enduit multiple à trois couches : une couche de base 6, une couche intermédiaire 7 et une couche de finition 8 (fig.3).

On commence par appliquer la couche de base 6 et on la fait sécher. Puis on applique la couche intermédiaire 7 et, tout de suite après, la couche de finition 8.

On procède alors au chauffage de l'ensemble à environ 430° C.

La pièce est terminée.

Sur la figure 4, on voit une partie d'une pièce réelle - 10 telle qu'un récipient creux du genre cocotte.

A l'extérieur, se trouve l'émail de décor 2, placé sur la pièce de fonte 1. Contre celle-ci, mais sur la face intérieure, se trouve la masse 3, puis la sous-couche 4 et, enfin, les trois couches de l'enduit au polytétrafluoréthylène 6-7-8.

Ainsi réalisé, le récipient présente tous les avantages de la fonte et tous les avantages des enduits au polytétrafluoréthylène : nettoyage aisé, pas d'accrochage des aliments, etc.

On a choisi d'illustrer l'invention en décrivant l'application à une pièce de fonte émaillée mais, comme on l'a indiqué plus haut, l'invention s'applique à l'enduction de pièces en tous métaux et, en particulier, aux récipients en acier tels que casserolles, faitouts et analogues.

La sous-couche 4 selon l'invention présente l'avantage de permettre son application directement sur la fonte, sans l'intermédiaire de la masse 3, grâce à la porosité de la fonte. Mais, compte tenu des indications données plus haut, la présence de la masse 3 peut s'avérer utile.

Lorsque l'on n'utilise pas de masse 3, les caractéristiques représentées au dessin sont exactement les mêmes, la seule différence résultant du fait que la sous-couche 4 est directement appliquée sur la pièce en fonte 1.

***

REVENDICATIONS

1- Sous-couche devant être disposée sur une pièce en métal pour favoriser le maintien en place d'un enduit simple ou multiple contenant du polytétrafluoréthylène ou analogue, caractérisée en ce que la surface de la pièce étant micro-poreuse, soit naturellement, soit par application d'un revêtement préalable de tout type connu, cette sous-couche comprend au moins deux composants dont l'un est de type fondant, et le cas échéant contient la même composition que le revêtement préalable, tandis que l'autre composant est de nature réfractaire et est cru, tel qu'un mélange riche en alumine, l'enduit au polytétrafluoréthylène devant revêtir entièrement cette sous-couche.

2- Sous-couche selon la revendication 1, caractérisée en ce que le produit fondant est un mélange à haute fluidité à chaud.

3- Sous-couche selon la revendication 2, caractérisée en ce que le mélange a la composition suivante, les quantités étant exprimées en pourcentages du poids total de matières sèches :

. feldspath ........................... 20 à 30 %
. silice............................... 10 à 16 %
. borax .............................. 38 à 42 %
. sable blanc ......................... 12 à 16 %
. spath fluor ......................... 2 à 4 %
. kaolin ............................. 3 à 6 %
. phosphate tricalcique ............... 0,7 à 1,1 %

4- Sous-couche selon la revendication 3, caractérisée en ce que le mélange a la composition suivante, les quantités étant exprimées en pourcentages du poids total de matière sèches :

. feldspath ......................... 25 %
. silice ............................ 13 %
. borax ............................. 39,6 %
. sable blanc ....................... 14 %
. spath fluor ....................... 3 %
. kaolin ............................ 4,5 %
. phosphate tricalcique ............. 0,9 %
                                     ─────────
                                      100,0 %

.../...

5- Sous-couche selon la revendication 1, caractérisée en ce que la sous-couche comprend trois composants, le premier contenant un fondant, le deuxième étant un émail à point de ramolissement supérieur de celui du premier composant et le troisième étant un mélange de matières crues réfractaires dont la plus grande partie est formée d'alumine ou analogue.

6- Sous-couche selon la revendication 5, caractérisée en ce que les trois composants ont des points de ramolissement étagés comme suit et exprimés en degrés centigrades :

. premier composant .................... 590° à 630°C
. deuxième composant .................. 740° à 780°C
. troisième composant ................. au-dessus de 1.000°C.

7- Sous-couche selon la revendication 5, caractérisée en ce que le mélange formé par le premier et le deuxième composants comprend au moins un produit ayant un pouvoir dissolvant vis-à-vis des oxydes de fer.

8- Sous-couche selon la revendication 5, caractérisée en ce que la pièce portant un revêtement préalable, la sous-couche comprend un composant que contient aussi ce revêtement préalable, ce composant étant présent dans le revêtement préalable pour environ 40 % en poids dudit revêtement, et dans la sous-couche pour environ 30 % en poids, le deuxième composant représentant environ 30 % en poids et le troisième représentant environ 40 % en poids de la sous-couche.

9- Procédé pour appliquer un enduit simple ou multiple, contenant du polytétrafluoréthylène ou analogue sur au moins une face d'une pièce dont la surface est micro-poreuse, soit naturellement, soit par mise en place préalable d'un revêtement et portant, le cas échéant, une couche d'émail sur au moins une autre face, caractérisé en ce que l'on recouvre la face devant recevoir l'enduit avec une sous-couche régulière contenant un composant fondant et un composant réfractaire cru, que l'on porte le tout à une température supérieure au point de ramolissement du composant fondant et inférieure au point de ramolissement du composant réfractaire cru, qu'après refroidissement on stocke éventuellement la pièce à l'abri de la poussière, que l'on met en place un enduit contenant du polytétrafluoréthylène ou analogue et que l'on porte le tout à une température d'environ 430° C.

- 14 -                                 0117801

10- Procédé selon la revendication 9, caractérisé en ce que l'enduit contenant du polytétrafluoréthylène ou analogue étant du type à trois couches dites couche de base, couche intermédiaire et couche de finition, on place la couche de base après refroidissement et stockage éventuel et on la sèche, on place ensuite la couche intermédiaire et tout de suite après la couche de finition, puis on porte le tout à une température d'environ 430° C.

11- Pièce en métal telle qu'un ustensile de cuisine revêtue d'une sous-couche selon l'une quelconque des revendications 1 à 8 ci-dessus.

12- Pièce en métal telle qu'un ustensile de cuisine obtenue par la mise en oeuvre du procédé conforme à la revendication 9 ci-dessus.

*****

PL. 1/1                                          0117801

FIG 1

FIG 2

FIG 3

FIG 4